# EUROPEAN PATENT SPECIFICATION

(11) **EP 0 368 250 B1**
(45) Date of publication and mention of the grant of the patent: **08.03.1995**
(21) Application number: 89120618.7
(22) Date of filing: 07.11.1989
(51) Int. Cl.: H04N 1/32

(54) **Apparatus for transmitting stored information**
Einrichtung zur Übertragung gespeicherter Information
Appareil pour la transmission d'informations mémorisées

(30) Priority: 07.11.1988 JP 281791/88
(43) Date of publication of application: 16.05.1990
(73) Proprietor: SHARP KABUSHIKI KAISHA, Osaka (JP)
(72) Inventor: Terasaka, Teiji, Yamatokoriyama-shi Nara-ken (JP)
(74) Representative: TER MEER STEINMEISTER & PARTNER GbR

(56) References cited:
- FR-A- 2 589 657
- GB-A- 2 166 619
- US-A- 4 524 393

## Description

### 1. Field of the Invention

The present invention relates to an apparatus for transmitting information comprising means for generating plural information items to be sequentially transmitted, a first memory having plural store areas of predetermined storage capacity in response to an output from the transmission information generating means for separateley storing in each store area the information items to be transmitted, memory means for storing a transmission sequence in correspondence to each store area of the first memory and transmitting means in response to an output from the first memory for transmitting the information. Such an information transmitting apparatus is preferably embodied in a facsimile apparatus or the like.

### 2. Description of the Prior Art

Hitherto, in the facsimile apparatus or the like, the apparatus having functions for transmitting plural sets of identical or different image data that have been read by a reading unit, to plural destinations is widely known. Such facsimile apparatus is provided with a memory for storing plural sets of image data.

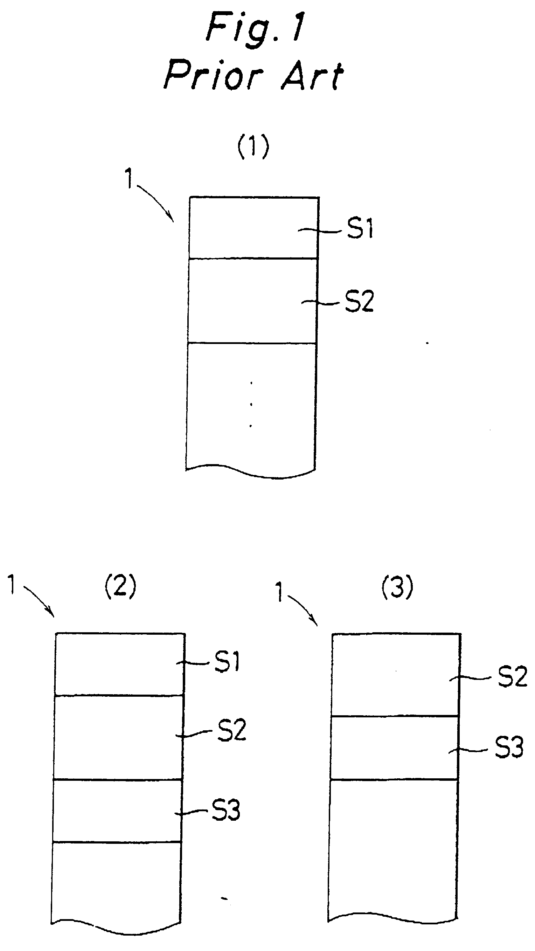

Fig. 1 is a diagram showing the stored information of a memory 1 in a conventional facsimile apparatus. When sending different image data to plural destinations, first plural original images of ine to several pages are read by a reading unit containing a charge-coupled device (CCD). The image data delivered from the reading unit is coded by image processing such as data compression. The coded image data is stored in the memory 1.

In this memory 1, the image data is sequentially stored from the area of the smaller address number to the area of the larger number. For example, in Fig. 1 (1), in store area S1, S2, image data corresponding to original images of one to several pages are stored, and when new image data is read, it is stored in a store area S3, next to the store area S2, as shown in Fig. 1 (2).

In this way, the image data stored in the memory 1 is sent out sequentially to the facsimile apparatus at the destinations from the image data in the store area of the smaller address number.

The image data transmitted to the destinations by this operation is erased from the memory 1. For example in Fig. 1 (2), when transmission of image data in store area S1 is over, the image data stored in the store area S2, S3, ... are shifted as shown in Fig. 1 (3), so that the image data in the store area S1 is erased. Afterwards, the image data stored in the store area S2 is transmitted.

In the prior art, by shifting the image data stored in the memory 1, the image data that has been transmitted and is no longer necessary is erased.

When a large quantity of image data is stored in the memory 1, it takes a long time in such shifting action. In the facsimile apparatus, the reception action cannot be started until the transmission to plural destinations is over. Therefore, the convenience is inferior in the conventional facsimile apparatus taking a long time in transmission action.

### SUMMARY OF THE INVENTION

It is hence a primary object of the invention to present a method and apparatus for transmitting information stored in a memory in a short time even to plural destinations.

To achieve the above object, the invention presents an apparatus for transmitting information as defined in claim 1. This apparatus is characterized in that the memory means comprises: a second memory having plural store areas individually corresponding to each destination for storing in a respective store area a start address designating one of the store areas of the first memory which stores the information item to be first transmitted to the corresponding destination, and a third memory having plural store areas individually corresponding to the store areas of the first memory, said third memory being arranged to store tag information indicating whether a final information item to be transmitted to a destination is stored or not in the corresponding store area of the first memory, and to store address information designating a store area of the first memory which stores a subsequent information item to be sequentially transmitted in the sequence of information transmission; and that controlling means are provided for putting out to the transmitting means information items stored in the first memory in accordance with the transmission sequence stored in the second and third memory, said controlling means reading out the start address from the second memory for each destination to supply to the transmitting means the information item to be first transmitted to the corresponding destination, and controlling the transmission sequence and the termination of the transmission sequence of information items stored in the first memory.

According to a preferred embodiment, the present transmitting apparatus further comprises a fourth memory having store areas respectively corresponding to each store area of the first memory for storing an indication whether each store area of said first memory is storing or not information to be transmitted, and wherein the controlling means in response to an output from the transmission information generating means searches the fourth memory to get an indication of availability of each of said store areas of the first memory, stores in the store areas of the fourth memory a respective indication of availability corresponding to each store area of the first memory having stored an information item to be transmitted, stores in the store area of the second memory said start address, and stores in the store area of the third memory said tag information and said address information.

In another preferred embodiment of the invention, the controlling means erases the stored information of each store area of the fourth memory corresponding to the store area of the first memory storing the transmitted information after transmission.

Preferably the transmission information generating means comprises image pick-up elements.

Preferably the transmitting means transmits the information through the medium of telephone line.

Thus, according to the invention, since the information to be transmitted being stored in the store area of the transmission information storing memory is transmitted according to the transmission sequence stored in the transmission sequence storing memory, it is not necessary to transmit while sequentially shifting the store area of the transmission information storing memory of the information to be transmitted, and therefore the transmission time is notably shortened and the convenience is enhanced.

### BRIEF DESCRIPTION OF THE DRAWINGS

This and other objects of the invention, as well as features and advantages thereof, will be better understood and appreciated from the following detailed description taken in conjunction with the drawings, in which:

Fig. 1 is a diagram for explaining writing/reading action of a memory 1 in a conventional facsimile apparatus.

Fig. 2 is a block diagram showing an electric composition of a facsimile apparatus 11 as one of the embodiments of the invention.

Fig. 3 is a drawing showing the structure of a transmission information storing memory C.

Fig. 4 is a drawing showing the structure of a cluster control memory U.

Fig. 5 is a drawing showing the structure of a start cluster storing memory F.

Fig. 6 is a drawing showing the structure of a transmission sequence storing memory N.

Fig. 7 is a flow chart for explaining the image data writing action into the transmission information storing memory C.

Fig. 8 is a flow chart for explaining the reading action from the transmission information storing memory C.

Fig. 9 is a flow chart for explaining the image data erasing action of the transmission information storing memory C.

### DETAILED DESCRIPTION OF THE PREFERRED EMBODIMENT

Referring now to the drawings, one of the preferred embodiments of the invention is described in detail below.

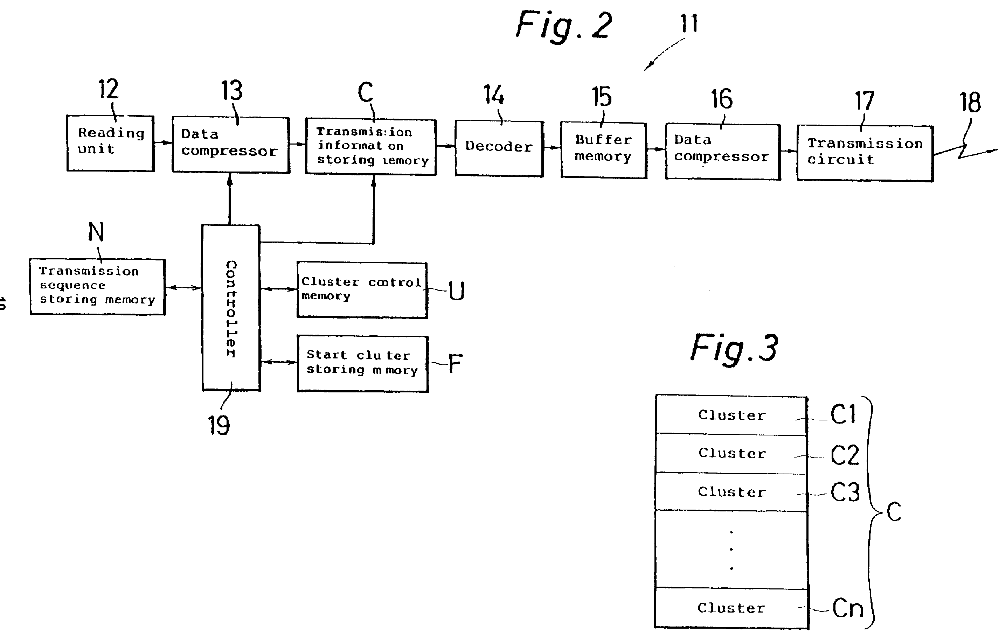

Fig. 2 is a block diagram showing an electric composition of a facsimile apparatus 11 as one of the embodiments of the invention. The facsimile apparatus 11 comprises a reading unit 12 for reading the original image, a transmission information storing memory C, a transmission sequence storing memory N, a controller 19 for controlling writing/reading of the transmission information storing memory C, and a transmission circuit 17 for transmitting the image data via a telephone line 18.

This facsimile apparatus 11 possesses a function of storing a plurality of image data corresponding to the original images of one or several pages, and sequentially transmitting to destinations individually corresponding to each image data.

The reading unit 12 comprises means for conveying the documents, an image pickup element realized by CCD or the like for taking the original image, and others, and it reads the original image to be transmitted, and delivers the image data into a data compressor 13. The image data having a large redundancy from the reading unit 12 is subjected to data compression processing in this data compressor 13, and the image data is encoded. The coded image data from the data compressor 13 is written into the transmission information storing memory C. The write/read control of the image data stored in the transmission information storing memory C is effected by a controller 19 which is realized, for example, by a microcomputer. Besides, in relation to the write/read action of the transmission information storing memory C, a transmission sequence storing memory N, a cluster control memory U, and a start cluster storing memory F are connected to the controller 19.

The image data being read out from the transmission information storing memory C is decoded by a decoder 14, and is temporarily stored in a buffer memory 15. Afterwards, the data compression is processed in a data compressor 16 according to the standard specified for facsimile communications, and is coded. The coded image data is transmitted to a telephone line 18 by a transmission circuit 17 comprising a newwork control unit (NCU) and others. The transmitting means is composed of decoder 14, buffer memory 15, data compressor 16, and transmission circuit 17.

Fig. 3 is a drawing showing the structure of the transmission information storing memory C. The transmission information storing memory C comprises plural store areas (hereinafter the store area are called clusters) C1 to Cn. The image data from the data compressor 13 is divided in information items and each of them is stored in the clusters C1 to Cn.

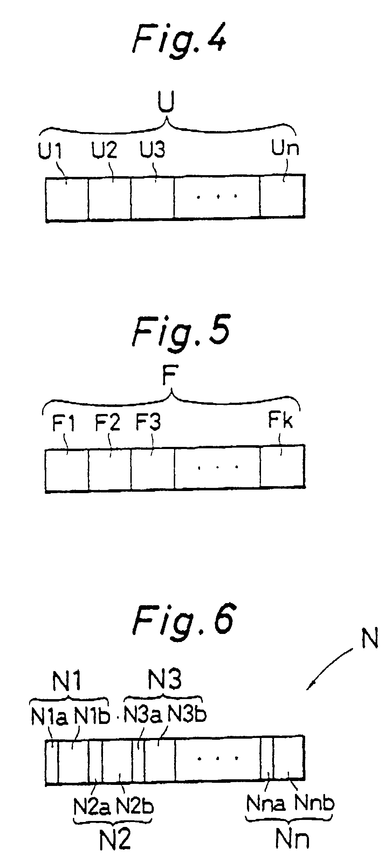

Fig. 4 is a drawing showing the structure of the cluster control memory U. The cluster control memory U is composed of store area U1 to Un corresponding individually to the clusters C1 to Cn in the transmission information storing memory C. Each one of the store areas U1 to Un stores an indication showing whether the image data to be transmitted is stored in the corresponding clusters C1 to Cn or not.

In other words, a store area Ui (i = 1, 2, ..., n) is composed of, for example, one bit, and if an image data item to be transmitted is stored in cluster Ci in this store area Ui, "1" is stored, and if the image data item to be transmitted is not stored, or when an image data item from the data compressor 13 can be stored in this cluster Ci, "0" is stored.

Fig. 5 is a drawing showing the structure of the start cluster storing memory F. The start cluster storing memory F is composed of plural store area F1 to Fk. Each one of the store area F1 to Fk is individually corresponding to each destination when transmitting the image data to plural destinations. A store area Fm (m = 1, 2, ..., k) stores the cluster number j0 of the cluster Cj0 (j0 = 1, 2, ..., n) in which the first image data item to be transmitted to the corresponding destination is stored.

Fig. 6 is a drawing showing the structure of the transmission sequence storing memory N. The transmission sequence storing memory N is composed of store area N1 to Nn individually corresponding to the cluster C1 to Cn of the transmission information storing memory C. Each store area Ni (i = 1, 2, ..., n) is composed of two sub areas Nia and Nib.

In the store area Nia tag information, for example, "1" is stored if the final image data to be transmitted to the destination is stored in the cluster Ci corresponding to the store area Ni. If the final image data to be transmitted to the destination is not stored in the cluster Ci, for example, "0" is stored.

The store area Nib stores the cluster number of the cluster which stores the image data item to be subsequently transmitted after the image data of the cluster Ci.

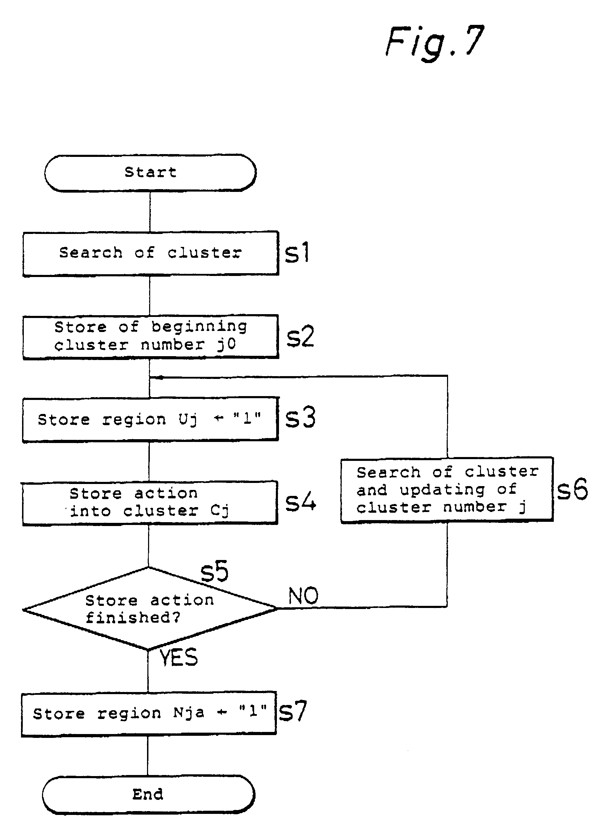

Fig. 7 is a flow chart explaining the writing action into the transmission information storing memory C in such facsimile apparatus 11. Referring to Fig. 7, the image data from the data compressor 13, is divided into predetermined data length, and is given to the transmission information storing memory C. At this time, at step s1, the cluster available for storing the image data is searched. That is, in the cluster control memory U, the store area Uj where "0" is stored is searched. Afterwards, at step s2, the cluster number j corresponding to the store area Uj is stored in, for example, the store area Fk of the start cluster storing memory F as the beginning cluster number j0.

At step s3, the data stored in the store area Uj of the cluster control memory U is updated to "1". Next, at step s4, the image data for the portion of one cluster from the data compressor 13 is stored in the cluster Cj.

At step s5, it is judged whether the store action of the image data to be transmitted to one destination is finished or not. If not finished, moving to step s6, after "0" is stored in the store area Nja corresponding to the cluster number j of the transmission sequence storing memory N, in the cluster control memory U again, the store area Uj1 in which "0" is stored is searched. As a result, the cluster number j is updated to the cluster number j1 corresponding, for example, to the store area Uj1 being searched, and is stored in the store area Njb of the transmission sequence storing memory N. Then, returning to step s3, the same action is effected to the new cluster number j.

At step s5, if the store action of the image data to one destination is over, advancing to step s7, "1" is stored in the store area Nja of the transmission sequence storing memory N corresponding to the cluster number j at the time of end of store action. In this way, the store action of image data to one destination is over.

Such store action is repeated several times when transmitting different original images to plural destinations. Finally, the image data to each destination is stored in the transmission information storing memory C.

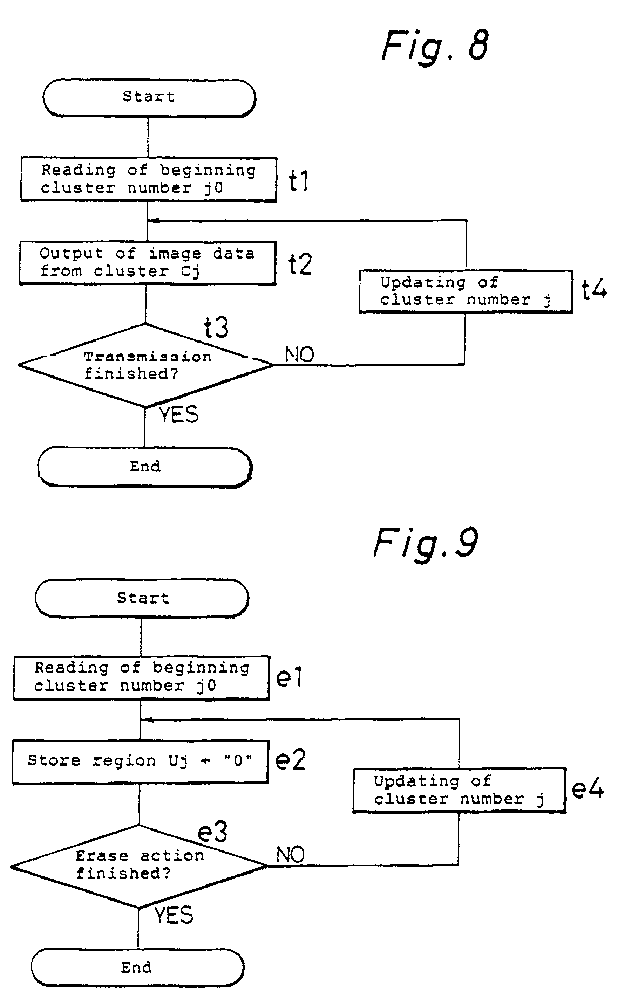

Fig. 8 is a flow chart for explaining the action for transmitting the image data stored in the above-mentioned action. At step t1, by the above action, the beginning cluster number j0 stored, for example, in the store area Fk of the start cluster storing memory F is read out as the cluster number j. Then, at step t2, the image data from the cluster Cj of the cluster number j is delivered into a decoder 14, and the above transmission action is effected. At step t3, it is judged whether the transmission of the image data to the destination is finished or not. That is, if the data stored in the store area Nja of the transmission sequence storing memory N is "0", it is judged that there is image data to be transmitted in succession, and the operation goes to step t4.

At step t4, the cluster number stored in the store area Njb is referred to, and the cluster number j is updated to this referred cluster number. Then returning to step t2, the same action is effected to the new cluster number j.

At step t3, if it is judged that the transmission of image data to one destination is finished, in this facsimile apparatus 11, the reading action of the image data from the transmission information storing memory C to the destination is finished. In other words, if the data stored in the store area Nja is "1", the transmission action of the image data to that destination is finished.

After the image data to one destination is read out from the transmission information storing memory C, that image data must be erased from the transmission information storing memory C.

Fig. 9 is a flow chart explaining such erasing action.

Referring to Fig. 9, the beginning cluster number j0 of the image data read out from the transmission information storing memory C for transmitting to one destination is stored in the store area Fk corresponding to the destination of the start cluster storing memory F. Therefore, at step e1, after transmission of image data, the cluster number j0 of the store area Fk is read out as the cluster number j of the cluster for storing the image data to be erased. Next, at step e2, data "0" is written in the store area Uj in the cluster control memory U.

At step e3, it is judged whether the final cluster is erased or not. That is, when "0" is stored in the store area Nja, it is judged that the final cluster is not erased, and the operation advances to step e4. At step e4, the cluster number stored in the store area Njb is read out. As a result, the cluster number j is updated by the cluster number being read out. Then returning to step e2, the same action is repeated on the new cluster number j.

At step e3, if the data stored in the store area Nja is "1", it is judged that the final cluster is erased, and the erase action of the image data in the transmission information storing memory C is terminated. Thereafter, transmission action, for example, to other destination is started.

Thus, in this embodiment, reading and transmitting the image data from the transmission information storing memory C are executed according to the sequence stored in the transmission sequence storing memory N in which the transmission sequence is preliminarily stored. When erasing the image data being transmitted, it is enough only to change the data in the store area corresponding to the cluster to be erased in the cluster control memory U. Therefore, it is not necessary to shift a huge quantity of image data stored in the transmission information storing memory C, and the transmission time may be notably shortened.

This embodiment relates to an example of realizing the transmitting apparatus of the stored information of memory in relation to the facsimile apparatus, but the invention may be also executed in transmission of the stored information of hard disk, floppy disk or random-access memories (RAM) in relation to apparatus such as personal computer as far as the apparatus is intended to store the information to be transmitted in the memory. Meanwhile, in the foregoing embodiment, the transmission sequence storing memory N and the cluster control memory U are separately disposed, but it may be also possible to store the data showing whether or not the image data to be transmitted is stored in the cluster Cj, that is, the data of the store area Uj, in each store area Nj of the transmission sequence storing memory N.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and the range of equivalency of the claims are therefore intended to be embraced therein.

## Claims

1. An apparatus (11) for transmitting information to plural destinations comprising:
- transmission information generating means (12, 13) for generating plural information items to be sequentially transmitted,
- a first memory (C) having plural store areas (cluster C1-Cn) of predetermined storage capacity in response to an output from the transmission information generating means (12, 13) for separateley storing in each store area (C1-Cn) the information items to be transmitted,
- memory means (F, N) for storing a transmission sequence in correspondence to each store area (C1-Cn) of the first memory (C), and
- transmitting means (14-18) responsive to an output from the first memory (C) for transmitting the information,
**characterized** in that the memory means (F, N) comprises:
- a second memory (F) having plural store areas (F1-Fk) individually corresponding to each destination for storing in a respective store area (F1-Fk) a start address (Cj0) designating one of the store areas (C1-Cn) of the first memory (C) which stores the information item to be first transmitted to the corresponding destination, and
- a third memory (N) having plural store areas (N1-Nn) individually corresponding to the store areas (C1-Cn) of the first memory (10), said third memory (N) being arranged to store tag information indicating whether a final information item to be transmitted to a destination is stored or not in the corresponding store area (C1-Cn) of the first memory (C), and to store address information designating a store area (C1-Cn) of the first memory (C) which stores a subsequent information item to be sequentially transmitted in the sequence of information transmission; and that
controlling means (19) are provided for putting out to the transmitting means (14-18) information items stored in the first memory (C) in accordance with the transmission sequence stored in the second and third memory (F, N), said controlling means (19) reading out the start address from the second memory (F) for each destination to supply to the transmitting means (14-18) the information item to be first transmitted to the corresponding destination, and controlling the transmission sequence and the termination of the transmission sequence of information items stored in the first memory (C).

2. The transmitting apparatus (11) as claimed in claim 1, further comprising:
a fourth memory (U) having store areas (U1-Un), respectively corresponding to each store area (C1-Cn) of the first memory (C) for storing an indication whether each store area (C1-Cn) of said first memory (C) is storing or not information to be transmitted, and wherein
the controlling means (19) in response to an output from the transmission information generating means (12, 13)
- searches the fourth memory (U) to get an indication of availability of each of said store areas (C1-Cn) of the first memory (C),
- stores in the store areas (U1-Un) of the fourth memory (U) a respective indication of availability corresponding to each store area (C1-Cn) of the first memory (C) having stored an information item to be transmitted,
- stores in the store area (F1-Fk) of the second memory (F) said start address (Cj0), and
- stores in the store area (N1-Nn) of the third memory (N) said tag information and said address information.

3. The transmitting apparatus according to claim 1 or 2, wherein
the controlling means (19) after transmission erases the stored indication of availability in each store area (U1-Un) of the fourth memory (U).

4. The transmitting apparatus according to one or more of the preceding claims, wherein
the transmission information generating means (12, 13) comprises image pick-up elements.

5. The transmitting apparatus according to one of the preceding claims, wherein the transmitting means (14-18) transmits the information to the medium of a telephone line (18).

## Patentansprüche

1. Vorrichtung (1) zum Übertragen von Information an mehrere Bestimmungsorte, mit:
- einer Übertragungsinformation-Erzeugungseinrichtung (12, 13) zum Erzeugen mehrerer sequentiell zu übertragender Einzelinformationen;
- einem ersten Speicher (C) mit mehreren Speicherbereichen (Cluster C1 - Cn) vorgegebener Speicherkapazität, der auf ein Ausgangssignal der Übertragungsinformation-Erzeugungseinrichtung (12, 13) anspricht, um in jedem Speicherbereich (C1 - Cn) die zu übertragenden Einzelinformationen getrennt abzuspeichern;
- einer Speichereinrichtung (F, N) zum Abspeichern einer Übertragungsfolge entsprechend für jeden Speicherbereich (C1 - Cn) des ersten Speichers (C), und
- einer Übertragungseinrichtung (14, - 18), die auf ein Ausgangssignal des ersten Speichers (C), um die Information zu übertragen;
**dadurch gekennzeichnet**, daß die Speichereinrichtung (F, N) folgendes aufweist:
- einen zweiten Speicher (F) mit mehreren Speicherbereichen (F1 - Fk), die jeweils einem Bestimmungsort entsprechen, um in einem jeweiligen Speicherbereich (F1 - Fk) eine Startadresse (Cj0) abzuspeichern, die denjenigen der Speicherbereiche (C1 - Cn) des ersten Speichers (C) bezeichnet, der die Einzelinformation abspeichert, die als erste an den entsprechenden Bestimmungsort zu übertragen ist; und
- einen dritten Speicher (N) mit mehreren Speicherbereichen (N1 - Nn), die jeweils den Speicherbereichen (C1 - Cn) des ersten Speichers (10) entsprechen, wobei der dritte Speicher (N) so ausgebildet ist, daß er Kennzeichnungsinformation speichert, die angibt, ob die letzte an einen Bestimmungsort zu übertragende Einzelinformation im zugehörigen Speicherbereich (C1 - Cn) des ersten Speichers (C) abgespeichert ist oder nicht, und daß er Adreßinformation speichert, die den Speicherbereich (C1 - Cn) des ersten Speichers (C) spezifiziert, der die nächste Einzelinformation speichert, die anschließend in der Reihenfolge der Informationsübertragung zu übertragen ist; und daß
- eine Steuerungseinrichtung (19) vorhanden ist, um im ersten Speicher (C) abgespeicherte Einzelinformationen an die Übertragungseinrichtung (14, 18) gemäß der im zweiten und dritten Speicher (F, N) abgespeicherten Übertragungsfolge auszugeben, wobei die Steuerungseinrichtung (19) die Startadresse für jeden Bestimmungsort aus dem zweiten Speicher (F) ausliest, um die als erste an den entsprechenden Bestimmungsort zu übertragende Einzelinformation an die Übertragungseinrichtung (14 - 18) zu liefern und um die Übertragungsfolge und das Beenden der Übertragungsfolge für die im ersten Speicher (C) abgespeicherten Einzelinformationen zu steuern.

2. Übertragungsvorrichtung (11) nach Anspruch 1, ferner mit:
- einem vierten Speicher (U) mit Speicherbereichen (U1 - Un), die jeweils jedem Speicherbereich (C1 - Cn) des ersten Speichers (C) entsprechen, um eine Kennzeichnung dahingehend abzuspeichern, ob jeder Speicherbereich (C1 - Cn) des ersten Speichers (C) zu übertragende Information speichert oder nicht; und
- wobei die Steuerungseinrichtung (19) auf ein Ausgangssignal der Übertragungsinformation-Erzeugungseinrichtung (12, 13) hin
-- den vierten Speicher (U) durchsucht, um eine Angabe für die Verfügbarkeit jedes der Speicherbereiche (C1 - Cn) des ersten Speichers (C) zu erhalten;
-- in den Speicherbereichen (U1 - Un) des vierten Speichers (U) eine jeweilige Angabe für die Verfügbarkeit für jeden Speicherbereich (C1 - Cn) des ersten Speichers (C), der eine zu übertragende Einzelinformation eingespeichert hat, einspeichert;
-- die genannte Startadresse (Cj0) im Speicherbereich (F1 - Fk) des zweiten Speichers einspeichert und
-- im Speicherbereich (N1 - Nn) des dritten Speichers (N) die Kennzeichnungsinformation und die Adreßinformation einspeichert.

3. Übertragungsvorrichtung nach einem der Ansprüche 1 oder 2, bei der die Steuerungseinrichtung (19) den abgespeicherten Hinweis betreffend die Verfügbarkeit nach der Übertragung in jedem Speicherbereich (U1 - Un) des vierten Speichers (U) löscht.

4. Übertragungsvorrichtung nach einem oder mehreren der vorstehenden Ansprüche, bei der die Übertragungsinformation-Erzeugungseinrichtung (12, 13) Bildaufnahmeelemente aufweist.

5. Übertragungsvorrichtung nach einem der vorstehenden Ansprüche, bei der die Übertragungseinrichtung (14, 18) die Information an das Medium einer Telefonleitung (18) überträgt.

## Revendications

1. Appareil (11) pour la transmission d'informations vers plusieurs destinations comprenant :
un moyen générateur d'informations à transmettre (12, 13) qui génère plusieurs éléments d'information devant être transmis séquentiellement,
une première mémoire (C) contenant plusieurs zones de stockage (groupes C1-Cn) ayant une capacité de stockage prédéterminée, qui stocke séparément dans chaque zone de stockage (C1-Cn) les informations à transmettre en réponse à une sortie du moyen générateur d'informations à transmettre,
un moyen de mémorisation (F, N) permettant de stocker une séquence de transmission en correspondance avec chaque zone de stockage (C1-Cn) de la première mémoire (C), et
un moyen de transmission (14-18) répondant à une sortie de la première mémoire (C) pour transmettre les informations,
caractérisé en ce que le moyen de mémorisation (F, N) comprend :
une seconde mémoire (F) contenant plusieurs zones de stockage (F1-Fk) correspondant individuellement à chaque destination, permettant de stocker dans une zone de stockage respective (F1-Fk) une adresse de départ (Cj0) désignant l'une des zones de stockage (C1-Cn) de la première mémoire (C) qui contient l'élément d'information devant être transmis en premier vers la destination correspondante, et
une troisième mémoire (N) contenant plusieurs zones de stockage (N1-Nn) correspondant individuellement aux zones de stockage (C1-Cn) de la première mémoire (10), ladite troisième mémoire (N) pouvant stocker une information drapeau indiquant si un élément d'information final à transmettre vers une certaine destination est contenu ou non dans la zone de stockage correspondante (C1-Cn) de la première mémoire (C), ainsi qu'une information d'adresse désignant une zone de stockage (C1-Cn) de la première mémoire (C) qui contient l'élément d'information consécutif devant être transmis séquentiellement dans la séquence de transmission des informations;
et dans lequel un moyen de contrôle (19) est prévu pour envoyer vers le moyen de transmission (14-18) des éléments d'information contenus dans la première mémoire (C) en fonction de la séquence de transmission contenue dans les seconde et troisième mémoires (F, N), ledit moyen de contrôle (19) lisant l'adresse de départ dans la seconde mémoire (F) pour chaque destination afin d'envoyer vers le moyen de transmission (14-18) l'élément d'information devant être transmis en premier vers la destination correspondante, et contrôlant la séquence de transmission et la terminaison de la séquence de transmission des éléments d'information contenus dans la première mémoire (C).

2. Appareil de transmission (11) selon la revendication 1, comprenant de plus une quatrième mémoire (U) contenant des zones de stockage (U1-Un) correspondant individuellement à chaque zone de stockage (C1-Cn) de la première mémoire (C), permettant de stocker un indicateur révélant si chaque zone de stockage (C1-Cn) de ladite première mémoire (C) contient ou non des informations à transmettre, et dans lequel le moyen de contrôle (19), en réponse à une sortie du moyen générateur d'informations à transmettre (12, 13),
cherche dans la quatrième mémoire (U) pour obtenir une indication de disponibilité de chacune des zones de stockage (C1-Cn) de la première mémoire (C),
mémorise dans les zones de stockage (U1-Un) de la quatrième mémoire (U) une indication respective de disponibilité correspondant à chacune des zones de stockage (C1-Cn) de la première mémoire (C) contenant un élément d'information à transmettre,
mémorise dans la zone de stockage (F1-Fk) de la seconde mémoire (F) ladite adresse de départ (Cj0), et
mémorise dans la zone de stockage (N1-Nn) de la troisième mémoire (N) ladite information drapeau et ladite information d'adresse.

3. Appareil pour la transmission selon la revendication 1 ou 2, dans lequel le moyen de contrôle (19) efface l'indication de disponibilité contenue dans chaque zone (U1-Un) de la quatrième mémoire (U) après la transmission.

4. Appareil pour la transmission selon l'une ou plusieurs des revendications précédentes, dans lequel le moyen générateur d'informations à transmettre (12, 13) comprend un organe d'acquisition d'image.

5. Appareil pour la transmission selon l'une des revendications précédentes, dans lequel le moyen de transmission (14-18) transmet les informations par le canal d'une ligne téléphonique (18).
